**Europäisches Patentamt**

**European Patent Office**

**Office européen des brevets**

(19)

(11) **EP 1 146 363 A1**

(12) ## DEMANDE DE BREVET EUROPEEN

(43) Date de publication:
**17.10.2001 Bulletin 2001/42**

(51) Int Cl.$^7$: **G02B 6/34**, H04B 10/145

(21) Numéro de dépôt: **01400912.0**

(22) Date de dépôt: **09.04.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **10.04.2000 FR 0004577**

(71) Demandeur: **ALCATEL**
**75008 Paris (FR)**

(72) Inventeurs:
• **Menezo, Sylvie, c/o Cabinet Ballot**
**94230 Cachan (FR)**
• **Delorme, Franck, c/o Cabinet Ballot**
**94230 Cachan (FR)**

(74) Mandataire: **Ballot, Paul**
**Cabinet Ballot**
**16, Avenue du Pont Royal**
**94230 Cachan (FR)**

(54) **Dispositif et système de contrôle de longeur d'onde**

(57) L'invention concerne un dispositif de comparaison entre N longueurs d'onde nominales ($\lambda ei$) et les longueurs d'onde de signaux optiques couplés respectivement à des ports d'entrée (GEi) d'un phasar dont la structure comprend un réseau (R) de guides (Gj). Selon l'invention, le phasar comprend deux ports de sortie de contrôle (A,B) respectivement situés au voisinage de points de focalisation correspondant à deux ordres d'interférences du réseau (R) prévus pour collecter la combinaison desdits signaux et sa structure est conçue pour que la fonction de transmission se rapproche d'une forme triangulaire afin d'élargir la plage de contrôle.

L'invention s'applique notamment au contrôle en longueur d'onde d'une source optique accordable.

Fig. 1

**Description**

L'invention se rapporte à un dispositif de comparaison de longueur(s) d'onde de signal optique avec au moins une longueur d'onde nominale, ledit dispositif comportant un phasar à réseau de guides.

L'invention se rapporte également à un système de réglage d'une source optique accordable servant notamment à générer les ondes porteuses de ces signaux.

La comparaison est réalisée en vue du contrôle en longueur d'onde des sources optiques utilisées pour effectuer le multiplexage en longueur d'onde dans les réseaux de télécommunications. L'augmentation des besoins en densité des canaux de transmission des réseaux utilisant le multiplexage en longueur d'onde, accentue l'importance d'un contrôle rapide des longueurs d'onde des sources optiques et de leur stabilité ; ces longueurs d'onde peuvent subir des dérives dues au vieillissement ou à des variations de température des sources optiques.

On appelle longueur d'onde nominale, la longueur d'onde d'émission imposée à la source optique. Les longueurs d'onde nominales correspondent typiquement à des valeurs normalisées par l'Union Internationale des Télécommunications (UIT). On pourra utiliser des lasers comme sources optiques. On entend en général par port d'entrée (ou port de sortie), un guide d'entrée (ou guide de sortie).

La correction des dérives consiste à ce que les longueurs d'onde émises par les sources optiques désignées par $\lambda i$, correspondent aux longueurs d'onde nominales désignées par $\lambda ei$.

Parmi les différents types de multiplexeurs passifs connus, on va considérer dans la suite ceux qui utilisent un élément à dispersion angulaire tel qu'un réseau de diffraction gravé ou un réseau formé de guides d'onde, reliant deux coupleurs en étoile. Dans la suite on désignera par phasar ce type de multiplexeur (désigné en anglais par « Phased-Arrayed Waveguide Grating Multiplexer» ou « AWG »).

Un exemple de dispositif de contrôle en longueur d'onde des sources optiques d'un phasar est propcsé dans l'article « Integrated real time multi-channel wavelength monitoring circuit using phased-arrayed waveguide grating » par S. Zhong et al., OFC'99, PP. 30-32. Cet article décrit la mise en oeuvre du contrôle en longueur d'onde pour un phasar : le peigne de N longueurs d'onde à contrôler et à multiplexer est dupliqué. Un peigne est utilisé pour le contrôle en longueur d'onde, l'autre pour la partie utile à multiplexer.

Un autre exemple de dispositif de contrôle en longueur d'onde des sources optiques d'un phasar est proposé dans l'article « A wavelength matching scheme for multiwavelength optical links and networks using grating demultiplexers » par F. Tong et al, IEEE Photonics Technology Letters, vol 7. No 6, June 1995. Dans la solution proposée, deux canaux de transmission sont dédiés à la comparaison des longueurs d'onde.

Dans l'article « Fabrication of multiwavelength simultaneous monitoring device using arrayed-waveguide grating », Electronics Letters, 14th March 1996, Vol.32, N°6, les auteurs K. Okamoto et al, décrivent un dispositif nécessitant de prélever une partie des N signaux d'entrée pour les réintroduire dans le phasar et comparer en sortie les N signaux correspondants détectés de part et d'autre des N signaux de sortie principaux. Outre quelques pertes engendrées par le prélèvement d'une partie des N signaux d'entrée, cette solution nécessite de dupliquer les signaux d'entrée, opération fastidieuse à réaliser.

Ces dispositifs présentent en outre des plages noires pour lesquelles le contrôle en longueur d'onde n'est pas réalisable.

L'invention a pour but de proposer une solution ne présentant pas les inconvénients mentionnés précédemment. Elle permet aussi d'élargir les plages de contrôle des longueurs d'onde des signaux émis.

L'invention s'applique au contrôle de la longueur d'onde de lasers discrets ou de lasers accordables.

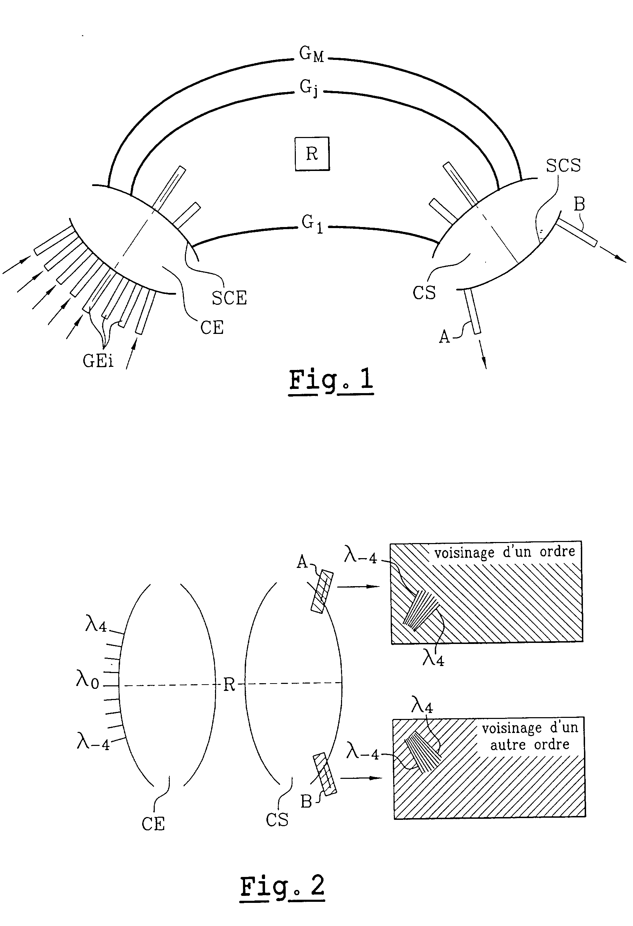

Une analyse détaillée du fonctionnement du type de phasar envisagé dans l'invention et représenté figure 1) montre que pour chaque longueur d'onde $\lambda i$ du laser d'émission i, i variant de 1 à N, l'onde optique constituant le signal d'entrée est couplée à un guide d'entrée GEi et subit les opérations suivantes :

- une diffraction dans un coupleur d'entrée CE, mathématiquement représentée par la transformée de Fourier du signal subissant la diffraction, chaque guide Gj situé au niveau de la surface de sortie SCE du coupleur recevant une partie de l'onde diffractée,
- des déphasages dans un réseau R des M guides Gj à chemins optiques variables, j variant de 1 à M, situé entre le coupleur CE et un coupleur CS, le chemin optique $njLGj$ parcouru dans un guide Gj s'exprimant en fonction de l'indice de réfraction $nj$ du guide Gj et de sa longueur $LGj$ ; les déphasages produisant en sortie du réseau R de guides des interférences qui sont constructives dans une direction dépendant de la longueur d'onde,
- une focalisation sur la surface de sortie SCS du coupleur CS des interférences constructives des ondes issues des guides du réseau R.

Le phasar selon l'invention est conçu pour qu'au moins deux ordres d'interférence correspondant à deux points de focalisation se forment sur la surface de sortie SCS du coupleur CS pour N longueurs d'onde déterminées, c'est-à-dire pour les N longueurs d'onde des sources optiques. Les signaux multiplexés résultant des interférences constructives à ces deux ordres sont utilisés pour le contrôle en longueur d'onde.

Plus précisément, l'invention a pour objet un dispositif de comparaison de longueur(s) d'onde de signal optique avec au moins une longueur d'onde nominale $\lambda_{ei}$, ledit dispositif comportant un phasar à réseau R de guides Gj, muni de N ports d'entrée de contrôle GEi associés respectivement à N longueurs d'onde nominales $\lambda_{ei}$, de sorte que tout signal optique ayant une desdites longueurs d'onde nominales et étant appliqué au port associé à cette longueur d'onde nominale se focalise en deux points de focalisation correspondant respectivement à deux ordres d'interférence du réseau R, ledit phasar comportant deux ports de sortie de contrôle A,B situés respectivement aux voisinages desdits points de focalisation, principalement caractérisé en ce que ledit phasar est conçu pour que la fonction de transmission représentative des variations de la transmission entre un port d'entrée de contrôle et un port de sortie de contrôle en fonction de la longueur d'onde ait une courbe représentative sensiblement de forme triangulaire au voisinage de la longueur d'onde nominale associée audit port d'entrée.

Concernant la réalisation pratique, un choix approprié des positions des ports de contrôle permet d'optimiser la fonction de contrôle. Pour cela, on utilise les fonctions de transmission TAi et TBi du phasar définies respectivement comme les rapports des puissances optiques présentes respectivement aux sorties A et B à la puissance optique du signal appliqué au port d'entrée GEi, ces rapports de puissance étant fonction de la longueur d'onde du signal appliqué.

Selon une caractéristique de réalisation de l'invention, les chemins optiques $n_jLG_j$ des guides Gj du réseau R du phasar sont ajustés pour que la courbe représentative de ladite fonction de transmission ait une forme sensiblement triangulaire.

Les positions des ports de sortie A et B sont avantageusement ajustées pour que la différence entre les deux fonctions de transmission TAi et TBi du phasar pour les ports de sortie A et B, dénommée fonction de discrimination Di, soit nulle pour les N longueurs d'onde nominales $\lambda_{ei}$ et bijective en fonction de la longueur d'onde autour de la valeur nominale de chaque longueur d'onde. Le caractère bijectif signifie qu'à chaque longueur d'onde prise autour de chacune des valeurs nominales, correspond une seule valeur de la fonction de discrimination Di et réciproquement.

L'invention a également pour objet un di-spositif tel que décrit précédemment dans lequel le phasar comprend un port d'entrée commun GElaser et N ports de sortie de démultiplexage associés respectivement auxdites N longueurs d'onde nominales et tels que tout signal optique appliqué audit port commun et ayant une desdites longueurs d'onde nominales se focalise sur le port de démultiplexage associé à cette longueur d'onde et en ce que lesdits ports de sortie de démultiplexage sont couplés respectivement auxdits ports d'entrée de contrôle associés respectivement aux mêmes longueurs d'ondes nominales.

Pour permettre un traitement électronique de la fonction de discrimination Di, les deux ports de sortie A et B sont couplés à des photodétecteurs.

L'invention concerne également un système de réglage d'une source optique accordable Li, principalement caractérisé en ce qu'il comporte un dispositif de comparaison tel que décrit dans les deux paragraphes précédents et des moyens d'asservissement CM pour ajuster la longueur d'onde d'une source optique couplée audit port d'entrée commun GElaser en fonction des signaux électriques fournis par lesdits photodétecteurs.

D'autres particularités et avantages de l'invention apparaîtront clairement à la lecture de la description faite à titre d'exemple non limitatif et en regard des dessins annexés sur lesquels :

- la figure 1 représente une vue schématique d'un phasar selon l'invention,
- la figure 2 montre en détail les points de focalisation des interférences constructives aux ordres considérés du réseau,
- la figure 3 représente les courbes des fonctions de transmission TAi, TBi en fonction de la longueur d'onde,
- la figure 4a) représente d'une part les courbes des fonctions de transmission du phasar pour les guides A et B situés au voisinage de deux ordres du réseau, et d'autre part la courbe de la fonction de discrimination Di correspondante ainsi que l'écart spectral de contrôle pour un réseau de guides R classique,
- la figure 4b) représente les mêmes courbes que la figure 4a) pour un réseau de guides dont les chemins optiques ont été ajustés,
- la figure 4c) représente les courbes des fonctions de discrimination pour plusieurs longueurs d'onde,
- la figure 5 représente une application du dispositif selon l'invention à une source optique accordable,
- la figure 6 représente un système de réglage d'une source optique accordable selon l'invention.

La figure 1 est une vue schématique d'un phasar. Il est constitué d'un premier coupleur CE en étoile dont l'entrée est reliée à une pluralité de guides d'entrée GEi constituant des ports d'entrée de contrôle. La surface de sortie SCE du coupleur CE qui se trouve face aux guides d'entrée GEi constitue une surface de réception des ondes optiques d'entrée couplées aux guides GEi et dont on souhaite contrôler la longueur d'onde. La surface de sortie SCE est reliée à un réseau R de M guides Gj. L'autre extrémité du réseau R est reliée à un coupleur en étoile CS. La surface de sortie SCS du coupleur CS qui se trouve face au réseau R constitue une surface de réception des ondes optiques issues du réseau R et est reliée aux guides A et B respectivement situés au voisinage des points de focalisation pour deux ordres du réseau R.

Le détail des points de focalisation des interférences constructives à ces ordres est présenté sur la figure 2. Pour chacun de ces deux ordres, la localisation des points de focalisation varie en fonction de la longueur d'onde $\lambda i$ (par exemple $\lambda$-4, ..., $\lambda 0$, ..., $\lambda 4$) du signal d'entrée. Le point de focalisation le plus décalé géométriquement par rapport à la position centrale pour l'ordre considéré correspond à la longueur d'onde la plus dispersée dont un exemple est donné sur la figure 2 sous la référence $\lambda$-4.

Selon l'invention, on ajoute deux guides de sortie de contrôle A et B au voisinage des points de focalisation pour les deux ordres considérés. A et B désignent indifféremment les ports de sortie ou les guides placés au niveau de ces ports. Au décentrage géométrique de chacun des guides A et B correspond un décalage spectral noté $\Delta\lambda ei$. On dénomme $\Delta\lambda eiA$, l'écart spectral entre la longueur d'onde nominale $\lambda ei$ et la longueur d'onde du maximum de la courbe de transmission TAi en A. De même pour $\Delta\lambda eiB$. Les guides A et B sont positionnés pour que $\Delta\lambda eiA = \Delta\lambda eiB$. On pose $\Delta\lambda ei = \Delta\lambda eiA + \Delta\lambda eiB$.

La fonction de transmission T de ce phasar, entre un guide d'entrée et un guide de sortie, aussi appelée fonction de transfert dans la littérature, s'exprime en fonction de la longueur d'onde par une fonction de type gaussien.

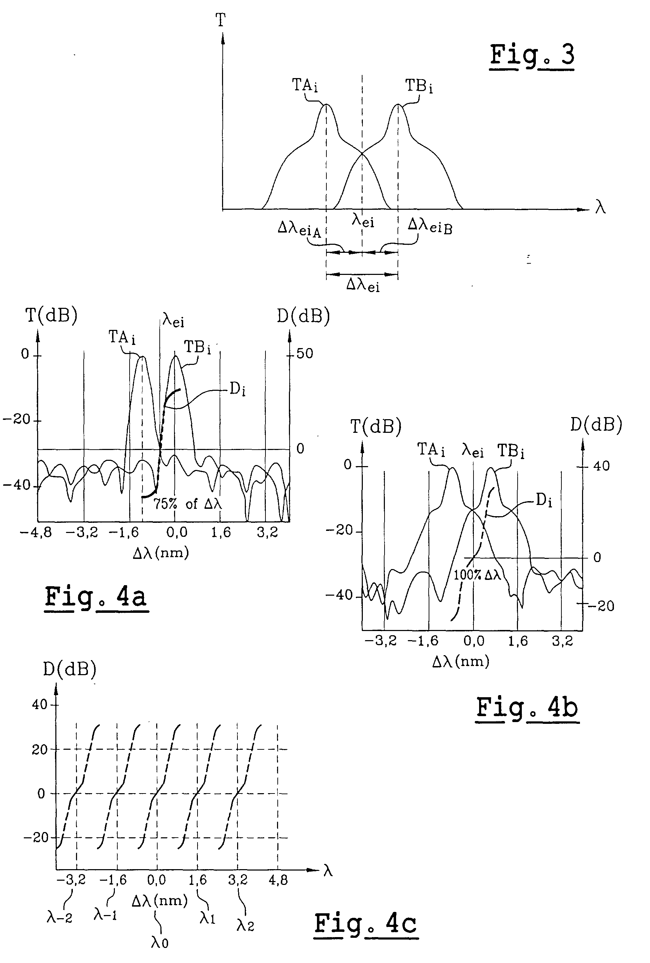

Sur la figure 3 sont représentées les fonctions de transmission TAi et TBi pour A et B. Le positionnement des guides A et B par rapport aux points de focalisation pour les ordres considérés est ajusté pour que, lorsqu'on analyse sur un même dispositif les fonctions de transmission TAi en A et TBi en B, le point de croisement des courbes représentatives de TAi et TBi coïncide avec une longueur d'onde nominale $\lambda ei$, pour chaque longueur d'onde $\lambda ei$ des sources optiques.

Lorsque la longueur d'onde émise par la source optique à l'entrée d'un guide GEi est identique à la longueur d'onde nominale $\lambda ei$, la différence entre les deux fonctions TAi et TBi s'annule. Cette différence appelée fonction de discrimination Di s'exprime en fonction de la longueur d'onde et est représentée sur les figures 4a), 4b) et 4c). Lorsque la longueur d'onde d'émission s'écarte de la longueur d'onde nominale $\lambda ei$, la fonction de discrimination Di prend une valeur non nulle, positive si elle est supérieure à la longueur d'onde nominale $\lambda ei$, négative si elle est inférieure. On pourra alors déduire la dérive en longueur d'onde de la source optique correspondante par rapport à la longueur d'onde nominale désirée.

On désignera par étendue spectrale de contrôle, la plage de longueur d'onde pour laquelle la fonction de discrimination Di est bijective. Lorsque la fonction de discrimination Di n'est plus bijective, le contrôle en longueur d'onde de la source optique n'est plus réalisable. Sur la figure 4a) c'est-à-dire dans le cas d'un phasar classique, on constate que l'étendue spectrale de contrôle ne couvre au maximum que 75% de l'espacement entre deux longueurs d'onde nominales $\lambda ei$ et $\lambda e(i+1)$.

Le dispositif selon l'invention permet obtenir un contrôle continu d'une longueur d'onde à l'autre c'est-à-dire couvrant 100% voire plus de l'espacement entre deux longueurs d'onde nominales $\lambda ei$ et $\lambda e(i+1)$, en élargissant cette étendue spectrale de contrôle, comme illustré par les figures 4b) et 4c). Cet élargissement est atteint de façon avantageuse en modulant de manière appropriée les chemins optiques njLGj des guides Gj pour que les fonctions de transfert TAi et TBi du phasar en A et B se rapprochent d'une fonction triangulaire.

Le chemin optique du guide Gj de rang j d'un phasar classique est égal à

$$n_1 LG_1 + (j-1)\,\Delta(nLG)$$

où $n_1 LG_1$ est le chemin optique du guide $G_1$ et $\Delta(nLG)$ est le pas du réseau.

On peut moduler les chemins optiques njLGj en ajoutant un chemin optique njLj ; l'invention a été mise au point en utilisant la relation suivante :

$$njLj = (\lambda i/2\pi) * (\sin 2\pi ax / 2\pi ax)^2$$

avec :

$$x = -1 + 2(j-1)/(M-1)$$
$$a = 1{,}5$$

Sur la figure 4 c) sont représentées les courbes des fonctions de discrimination Di autour de cinq longueurs d'onde ($\lambda$-2, $\lambda$-1, $\lambda 0$, $\lambda 1$, $\lambda 2$) régulièrement espacées. On remarque que pour chacune de ces fonctions de discrimination Di, l'étendue spectrale de contrôle ne présente pas de discontinuité avec l'étendue spectrale de contrôle suivante et/ou précédente : les plages noires sont donc totalement éliminées.

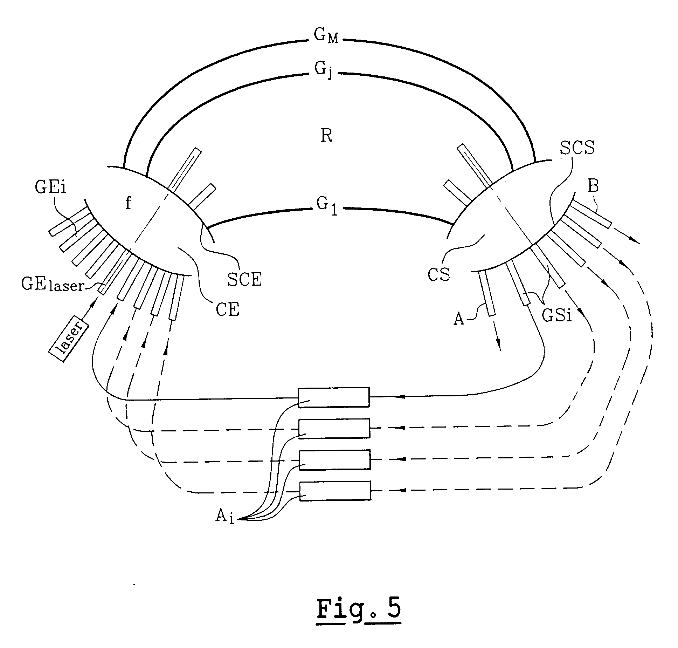

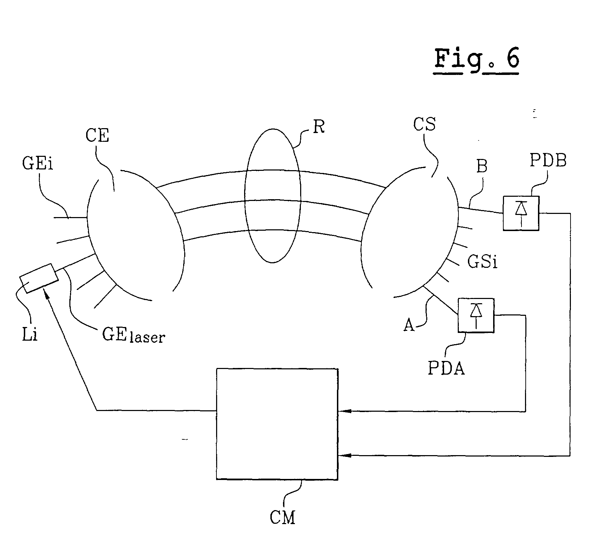

Le contrôle continu qui vient d'être décrit ci-dessus s'applique en particulier à un laser accordable en longueur d'onde comme cela va être décrit dans la suite et illustré par les figures 5 et 6.

Un laser accordable émet une onde utile dans une direction ou une onde « perdue » dans la direction opposée. Selon l'invention, cette partie perdue de l'onde est utilisée par le phasar pour effectuer la comparaison entre chaque longueur d'onde que le laser peut émettre et la longueur d'onde nominale $\lambda ei$ correspondante. Dans un premier temps, le phasar fonctionne en tant que démultiplexeur, c'est-à-dire qu'à chaque longueur d'onde nominale $\lambda ei$ que le laser peut émettre au niveau d'un port d'entrée commun GElaser représenté figure 5, correspond un port de sortie GSi qui coïncide avec un point de focalisation des interférences constructives se formant sur la surface de sortie SCS et qui dépend de la longueur d'onde. Chaque port de sortie GSi est couplé via un amplificateur Ai à un port d'entrée GEi différent du port d'entrée du laser GElaser.

La source optique accordable Li représentée figure 6, couplée au port d'entrée GElaser est par exemple un laser accordable à réflecteur de Bragg distribué.

Des photodétecteurs PDA et PDB sont couplés respectivement aux ports de sortie A et B. Des moyens électroniques d'asservissement CM ont des entrées reliées aux photodétecteurs PDA, PDB et une sortie de commande des longueurs d'onde de la source Li. Cette commande agit par exemple sur la température ou le courant d'alimentation de la source à régler.

Une façon d'effectuer le réglage consiste à ajuster le paramètre de réglage de la source de façon à annuler la fonction Di correspondant à une des longueurs d'onde nominales attribuées à la source. Ces opérations sont effectuées après un calibrage préalable du phasar à l'aide d'une source de référence dont la longueur d'onde est connue en absolu (par exemple la raie de C2H2).

Les résultats indiqués sur les figures précédentes ont été obtenus pour un phasar dont les paramètres sont reportés dans les tableaux suivants :

| Paramètres des guides d'onde | Valeur |
|---|---|
| Indice effectif des guides GEi,GSi,A,B et Gj | 3,1993 |
| Ordre d'interférence | 93 |
| Nombre M de guides Gj du réseau R | 60 |

Avant que les chemins optiques des guides du réseau R soient ajustés, la différence de longueur entre deux guides adjacents est $\Delta(LG) = 44{,}8242\ \mu m$.

La longueur d'onde $\lambda 0$ du laser accordable considéré est 1542 nm.

**Revendications**

1. Dispositif de comparaison de longueur(s) d'onde de signal optique avec au moins une longueur d'onde nominale ($\lambda ei$), ledit dispositif comportant un phasar à réseau (R) de guides (Gj), muni de N ports d'entrée de contrôle (GEi) associés respectivement à N longueurs d'onde nominales ($\lambda ei$), de sorte que tout$_i$ signal optique ayant une desdites longueurs d'onde nominales et étant appliqué au port associé à cette longueur d'onde nominale se focalise en deux points de focalisation correspondant respectivement à deux ordres d'interférence du réseau (R), ledit phasar comportant deux ports de sortie de contrôle (A,B) situés respectivement aux voisinages desdits points de focalisation, **caractérisé en ce que** ledit phasar est conçu pour que la fonction de transmission représentative des variations de la transmission entre un port d'entrée de contrôle et un port de sortie de contrôle en fonction de la longueur d'onde ait une courbe représentative sensiblement de forme triangulaire au voisinage de la longueur d'onde nominale associée audit port d'entrée.

2. Dispositif selon la revendication 1, **caractérisé en ce que** les chemins optiques (njLGj) des guides (Gj) du réseau (R) du phasar sont ajustés pour que la courbe représentative de ladite fonction de transmission ait une forme sensiblement triangulaire.

3. Dispositif selon l'une des revendications précédentes, **caractérisé en ce que** les positions des ports de sortie (A, B) sont ajustées pour que la différence entre les deux fonctions de transmission du phasar (TAi,TBi) pour les ports de sortie (A,B), dénommée fonction de discrimination (Di) soit nulle pour toutes les longueurs d'onde nominales ($\lambda ei$) et bijective en fonction de la longueur d'onde autour de la valeur nominale de chaque longueur d'onde ($\lambda ei$).

4. Dispositif selon l'une des revendications 1 à 3, **caractérisé en ce que** le phasar comprend un port d'entrée commun (GElaser) et N ports de sortie de démultiplexage associés respectivement auxdites N longueurs d'onde nominales et tels que tout signal optique appliqué audit port commun et ayant une desdites longueurs d'onde nominales se focalise sur le port de démultiplexage associé à cette longueur d'onde et **en ce que** lesdits ports de sortie de démultiplexage sont couplés respectivement auxdits ports d'entrée de contrôle associés respectivement aux mêmes longueurs d'ondes nominales.

5. Dispositif selon l'une des revendications précédentes **caractérisé en ce qu'**il comporte des photodétecteurs (PDA, PDB) couplés respectivement aux deux ports de sortie (A,B).

6. Système de réglage d'une source optique accordable (Li), **caractérisé en ce qu'**il comporte un dispositif de comparaison selon les revendications 4 et 5 prises en combinaison et des moyens d'asservissement (CM) pour ajuster la longueur d'onde d'une source optique couplée audit port d'entrée commun (GElaser) en fonction des signaux électriques fournis par lesdits photodétecteurs.

$G_M$

$G_j$

R

$G_1$

SCS

B

SCE

CE

CS

GEi

A

Fig. 1

A

$\lambda_{-4}$

voisinage d'un ordre

$\lambda_4$

$\lambda_0$

R

$\lambda'_4$

$\lambda_{-4}$

$\lambda_4$

voisinage d'un autre ordre

$\lambda_{-4}$

CE

CS

B

Fig. 2

Fig. 3

Fig. 4a

Fig. 4b

Fig. 4c

**Fig. 5**

Fig. 6

**Office européen des brevets**

**RAPPORT DE RECHERCHE EUROPEENNE**

Numéro de la demande

EP 01 40 0912

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 703 679 A (NIPPON TELEGRAPH & TELEPHONE) 27 mars 1996 (1996-03-27) * colonne 16, ligne 40 - ligne 57; figures 18-21,24-26 * | 1-3,5,6 | G02B6/34 H04B10/145 |
| X,D | OKAMOTO K ET AL: "FABRICATION OF MULTIWAVELENGTH SIMULTANEOUS MONITORING DEVICE USINGARRAYED-WAVEGUIDE GRATING" ELECTRONICS LETTERS,GB,IEE STEVENAGE, vol. 32, no. 6, 14 mars 1996 (1996-03-14), pages 569-570, XP000593641 ISSN: 0013-5194 * le document en entier * | 1-3 | |
| A | PATENT ABSTRACTS OF JAPAN vol. 1997, no. 06, 30 juin 1997 (1997-06-30) & JP 09 049937 A (NIPPON TELEGR &AMP;TELEPH CORP &LT;NTT&GT;), 18 février 1997 (1997-02-18) * abrégé * | 1 | |
| A,D | SHAN ZHONG ET AL: "Integrated real time multi-channel wavelength monitoring circuit using phased-array waveguide grating" OPTICAL FIBER COMMUNICATION CONFERENCE AND THE INTERNATIONAL CONFERENCE ON INTEGRATED OPTICS AND OPTICAL FIBER COMMUNICATIONS OFC/IOOC'99, pages 30-32 vol.3, XP002155883 1999, NJ, USA * le document en entier * | 1 | **DOMAINES TECHNIQUES RECHERCHES (Int.Cl.7)** G02B H04B |

Le présent rapport a été établi pour toutes les revendications

| Lieu de la recherche | Date d'achèvement de la recherche | Examinateur |
|---|---|---|
| BERLIN | 27 juin 2001 | von Moers, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
### RELATIF A LA DEMANDE DE BREVET EUROPEEN NO.

EP 01 40 0912

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-06-2001

| Document brevet cité au rapport de recherche | Date de publication | Membre(s) de la famille de brevet(s) | Date de publication |
|---|---|---|---|
| EP 0703679 A | 27-03-1996 | JP 8251105 A<br>US 5617234 A | 27-09-1996<br>01-04-1997 |
| JP 09049937 A | 18-02-1997 | AUCUN | |

EPO FORM P0460

Pour tout renseignement concernant cette annexe : voir Journal Officiel de l'Office européen des brevets, No.12/82